# EUROPEAN PATENT APPLICATION

(11) **EP 1 847 581 A1**
(43) Date of publication of application: **24.10.2007**
(21) Application number: 05710154.5
(22) Date of filing: 04.02.2005
(51) Int. Cl.: C09J 201/00, C09J 9/00, C09J 133/06

(54) **SOLID ADHESIVE AGENT AND RAW MATERIAL COMPOSITION FOR THE SAME**

(71) Applicant: Nippon Shokubai Co., Ltd., Chuo-ku, Osaka-shi Osaka 541-0043 (JP)
(72) Inventor: IMAI, Daisuke, Osaka 5640024 (JP); MIWA, Takahiro, Osaka 5690854 (JP)
(74) Representative: Müller-Boré & Partner Patentanwälte
(86) International application number: PCT/JP2005/002109
(87) International publication number: WO 2006/082661

(57) **Abstract**

The present invention relates to a solid adhesive agent with improved initial adhesion and a raw material liquid for preparing the solid adhesive agent. The solid adhesive agent of the present invention is obtainable by blending an adhesive polymer with a glass transition temperature (Tg) of 40 to 55 °C and a gelling agent.

## Description

### FIELD OF THE INVENTION

The present invention relates to a solid adhesive agent excellent in adhesiveness and coating properties to an adherend, and also relates to a raw material liquid composition for preparing the solid adhesive agent.

### BACKGROUND ART

There have been known so-called adhesive sticks produced by filling a lipstick-shaped container with a solid adhesive agent comprising a gelling agent for shape retention such as a long chain fatty acid salt and various adhesive polymers such as polyvinyl pyrrolidone as main component. However, since polyvinyl pyrrolidone which has conventionally been used as an adhesive polymer for a solid adhesive agent is expensive, an inexpensive adhesive polymer for a solid adhesive agent instead of polyvinyl pyrrolidone is demanded.

In such a solid adhesive agent, excellent initial adhesion such that, for example, a time required until exerting the required adhesive strength is short when coating on one adherend of a pair of adherends and then bonding the adherend to the other adherend is demanded.

For example, a solid adhesive agent, an aqueous dispersion of polyacrylate or an alkali-soluble polyacrylate including a free acid group using as an adhesive polymer, has been proposed (refer to WO 03/029376).

However, examinations by the inventors have found that the solid adhesive agent proposed therein is insufficient in terms of initial adhesion.

An object of the present invention is to provide a solid adhesive agent having improved initial adhesion while maintaining good coating properties to an adherend and a raw material liquid composition for preparing the solid adhesive agent.

### DESCRIPTION OF THE INVENTION

The present invention relates to a solid adhesive agent obtainable by blending an adhesive polymer with a glass transition temperature (Tg) of 40 to 55 °C and a gelling agent.

### BEST MODE FOR CARRYING-OUT OF THE INVENTION

The present inventors have found that in a solid adhesive agent comprising an adhesive polymer as a main adhesive component, initial adhesion is enhanced without damaging coating properties to an adherend by blending an adhesive polymer with a glass transition temperature (Tg) of 40 to 55 °C and completed the present invention. Hereinafter, composition of the solid adhesive agent of the present invention will be explained in detail.

The adhesive polymer used in the present invention is required to have a glass transition temperature (Tg) of 40 to 55 °C. If the Tg is out of the range, initial adhesion of the solid adhesive agent may be lowered.

The Tg of the adhesive polymer is preferably 42 °C or more, more preferably 44 °C or more, and preferably 50 °C or less, more preferably 48 °C or less.

Tg in the present invention refers to a value measured by a method shown as follows.

### (Method of measuring Tg)

Differential scanning calorimetry (DSC) is performed using DSC220 produced by SEIKO in accordance with JIS K-7121.

Ten mg of a dried adhesive polymer is put in a measurement container, and after the container is covered and fixed, it is attached to a container holder. An empty measurement container with a cover fixed is attached to another container holder. The temperature is increased at a rate of 20 °C per minute up to 150 °C while nitrogen is flowed therein in an amount of 10 mL per minute. After this condition is kept for 20 minutes, it is allowed to cool at a rate of 10 °C per minute to be -20 °C. After the condition is kept for 10 minutes, the temperature is increased again at a rate of 20 °C per minute up to 150 °C to draw a DSC curve. The Tg is determined from the resultant DSC curve in accordance with JIS K-7121 9.3 "Method for Determining the Glass Transition Temperature".

As the adhesive polymer, recommended is a polymer preferably containing an ethylene-based unsaturated monomer without having an acid group (hereinafter simply referred to as "ethylene-based unsaturated monomer" occasionally) as a constituent component, more preferably a polymer containing an ethylene-based unsaturated monomer without having an acid group and an acid monomer as constituent components.

As an ethylene-based unsaturated monomer without having an acid group, there may be listed a (meth) acrylic acid ester-based polymerizable monomer which is an ester of a (meth) acrylic acid and an alcohol (except for cyclic alcohol) having 1 to 18 carbon atoms such as methyl (meth) acrylate, ethyl (meth)acrylate, propyl (meth)acrylate, butyl (meth)acrylate, and 2-ethylhexyl (meth)acrylate; a styrene-based polymerizable monomer such as styrene, α-methyl styrene, vinyl toluene, p-methyl styrene, chloro methyl styrene, and ethyl vinyl benzene; cyclohexyl group-containing polymerizable monomer such as cyclohexyl (meth) acrylate; an unsaturated ester such as metyl crotonate, vinyl acetate, and vinyl propionate; a diene such as butadiene, isoprene, 2-methyl, 3-butadiene, and 2-chloro-1,3-butadiene; an allyl such as (meth)allyl alcohol, a glycidyl (meth) allyl ether; an unsaturated cyanogen such as (meth)acrylonitrile and α-chloroacrylonitrile; a hydroxyl group-containing (meth)acrylic acid ester such as 2-hydroxy ethyl (meth)acrylate, 2-hydroxy propyl (meth)acrylate, and a monoester of (meth)acrylic acid and polypropylene glycol; a polyethylene glycol chain-containing polymerizable monomer such as polyethylene glycol (meth)acrylic ester; an ester or an amide of an unsaturated monocarboxylic acid and an alkyl polyalkylene glycol obtained by adding 1 to 300 mol of oxyalkylene having 2 to 4 carbon atoms to an alcohol or an amine such as methoxypolyethylene glycol mono(meth)acrylate and methoxypolyalkylene glycol mono(meth)acrylate; an allyl obtained by adding 1 to 300 mol of oxyalkylene having 2 to 4 carbon atoms to (meth)allyl alcohol; a (meth)acrylamide and a derivative thereof such as dimethyl amino ethyl (meth)acrylamide, dimethyl amino propyl (meth)acrylamide, (meth)acrylamide, N-monomethyl (meth)acrylamide, (meth)acrylalkylamide, N-mono ethyl (meth)acrylamide, N-methylol (meth)acrylamide, N, N-dimethyl (meth)acrylamide, N-butoxymethyl (meth)acrylamide, and methylene (meth) acrylamide; a diamide of an unsaturated dicarboxylic acid such as maleic acid and fumaric acid and an amine having 1 to 22 carbon atoms; N-vinyl pyrrolidone; a basic polymerizable monomer such as methyl amino ethyl (meth)acrylate, dimethyl amino ethyl (meth)acrylate, dimethyl amino propyl (meth)acrylate, dibutyl amino ethyl (meth)acrylate, vinylpyridine and vinyl imidazole; a carbolic acid-based monomer such as vinyl phenol; an aziridine group-containing monomer such as 2-aziridinyl ethyl (meth)acrylate and (meth)acryloyl aziridine; an oxazoline group-containing polymerizable monomer such as 2-isopropenyl-2-oxazoline and 2-vinyl oxazoline; an epoxy group-containing polymerizable monomer such as glycidyl (meth)acrylate and acrylic glycidyl ether; a hydrolyzable silicon group-containing polymerizable monomer directly bonded to silicon atom such as vinyl trimethoxysilane, vinyltriethoxysilane, γ-(meth)acryloyl propyl trimethoxysilane, vinyl tris(2-methoxyethoxy)silane, and allyltriethoxysilane; a halogen-containing polymerizable monomer such as vinyl fluoride, vinylidene fluoride, vinyl chloride and vinylidene chloride; a bifunctional (meth)acrylate such as (poly) ethylene glycol di(meth)acrylate, (poly)alkylene glycol di(meth)acrylate, hexanediol di(meth)acrylate and trimethylol propane di(meth)acrylate; a polyfunctional (meth)acrylic acid ester having 2 or more polymerizable unsaturated groups in a molecule such as an esterified material of (meth)acrylic acid and a polyvalent alcohol including ethylene glycol, 1,3-butylene glycol, diethylene glycol, 1,6-hexanediol, neopentyl glycol, polyethylene glycol, propylene glycol, polypropylene glycol, trimethylol propane, pentaerythritol, and dipentaerythritol; a polyfunctional allyl compound having 2 or more polymerizable unsaturated groups in a molecule such as diallyl phthalate, diallyl malate and diallyl fumarate; allyl(meth)acrylate; an aromatic divinyl compound such as divinyl benzene; a polymerizable polyfunctional monomer such as allyl (meth) acrylate; a cyanurate such as triallyl cyanurate; and an associative monomer such as an esterified material of poly(ethylene glycol)alkylether and (meth)acrylic acid. These may be used alone, or two or more kinds thereof may be used in combination.

Preferred ethylene-based unsaturated monomers include at least one kind of monomer selected from (meth)acrylic acid ester-based polymerizable monomers and unsaturated esters; among them, a (meth)acrylic acid ester-based polymerizable monomer is preferable.

As the acid monomer, a carboxylic acid group-containing polymerizable monomer such as (meth) acrylic acid, itaconic acid, crotonic acid, maleic acid and maleic anhydride; a sulfonate group-containing polymerizable monomer such as vinyl sulfonic acid, styrenesulfonic acid, 2-(meth)acrylamide-2-methylpropanesulfonic acid, and sulfoethyl (meth)acrylate; a phosphoric acid group-containing polymerizable monomer such as mono(2-methacryloyloxyethyl)phosphate, mono(2-acryloyloxy ethyl) phosphate, 2-(meth)acryloyloxy propyl phosphate, 2-(meth)acryloyloxy-3-chloro propyl phosphate and 2-(meth)acryloyloxy ethyl phenyl phosphate; and an inorganic salt such as sodium salt and potassium salt or an ammonium salt and an organic amine salt of the polymerizable monomers; these may be used alone, or two or more kinds thereof may be used in combination.

Preferred acid monomers include a carboxylic acid group-containing polymerizable monomer and a sulfonate group-containing polymerizable monomer; among them, a carboxylic acid group-containing polymerizable monomer is preferred.

Among adhesive polymers containing ethylene-based unsaturated monomers and acid monomers as constituent components as described above, preferred are (meth) acrylic acid ester-based polymerizable monomer as the ethylene-based unsaturated monomer and a polymer containing, as the acid monomer, (meth) acrylic acid or a salt thereof as a constituent component because of their excellent adhesiveness to paper which is one of the main adherends of the solid adhesive agent of the present invention.

In order to make Tg of an adhesive polymer of the present invention within the above range, for example, if the above adhesive polymers comprise, as constituent components, ethyl acrylate as the ethylene-based unsaturated monomer and methacrylic acid as the acid monomer, it is recommended to blend the ethyl acrylate in a proportion of 61.5 parts by mass or more and 68 parts by mass or less, and the methacrylic acid in a proportion of 32 parts by mass or more and 38.5 parts by mass or less when a total thereof is 100 parts by mass.

The weight average molecular weight of the adhesive polymer is preferably 100,000 or more.

Further, as an acid number of the adhesive polymer, recommended is preferably 170 mgKOH/g or more, more preferably 180 mgKOH/g or more, and preferably 250 mgKOH/g or less, more preferably 240mgKOH/g or less.

Properties of the adhesive polymer are not particularly limited as long as it is water-soluble or water dispersible, and an alkali-soluble emulsion which is in emulsion state with water as a medium under acidic condition (pH 3 or less) and which is water soluble under neutral condition (pH 7 or more) is preferable.

When the adhesive polymer is prepared by emulsion polymerization, an emulsifying agent is preferably used. The emulsifying agent is not particularly limited, and there may be listed an anionic surfactant, a nonionic surfactant, a cationic surfactant, an ampholytic surfactant, and a polymer surfactant and the like which are commonly used in emulsion polymerization. Additionally, a reactive surfactant having an unsaturated group such as polyoxyethylene alkenylaryl sulfate salt and α-sulfonato-ω-1-(allyloxymethyl) alkyloxy polyoxyethylene salt may be used, too. Further, a nonvolatile content in an aqueous dispersion obtained after an emulsion polymerization reaction is preferably 60 % or less. If the nonvolatile content is more than 60 %, there is tendency that viscosity of the aqueous dispersion becomes too high or dispersion stability may not be maintained so that it becomes more likely to aggregate.

It is recommended that an average particle diameter of polymer particles of the adhesive polymer obtained by the emulsion polymerization is preferably 70 nm or less, and more preferably 60 nm or less. In the solid adhesive agent of the present invention, the adhesive polymer is essentially formed into a homogeneous liquid by mixing and heating together with a fatty acid, a polyvalent alcohol and another additive followed by neutralization with alkaline solution (preferably sodium hydroxide aqueous solution), but there is tendency that if the average particle diameter of the polymer particles is more than the above range, aggregation of polymer particles becomes more likely to occur during neutralization with the alkaline solution (sodium hydroxide aqueous solution), so that considerable time is required to homogenize the dispersion.

Further, it is recommended that viscosity of the adhesive polymer measured using B-type viscosity meter (spindle No.2) at 25 °C when the polymer is formed into an aqueous solution having pH of 7 and a concentration of 1 % by mass is preferably 70 mPa.s or more, more preferably 80 mPa.s or more, and preferably 500 mPa.s or less, more preferably 400 mPa.s or less. If the viscosity of the aqueous solution is less than the above range, adhesive strength of the solid adhesive agent may not be obtained sufficiently.

The solid adhesive agent of the present invention is obtained, for example, by mixing and heating each of the raw materials to form into a viscous liquid material followed by filling a container (such as a lipstick-shaped container) with the liquid material for cooling and solidification; however, there may occur a problem that, if the viscosity of the aqueous solution of the adhesive polymer is more than the above range, viscosity of the liquid material before filled in the container will increase so that removal operation of the material from the container and filling operation in a container (such as lipstick-shaped container) having a relatively small diameter such as 1 to several cm require a considerable time.

The solid adhesive agent of the present invention comprises a gelling agent as a constituting element for ensuring shape retention. The above gelling agent is not particularly limited, and a publicly known gelling agent conventionally used for a solid adhesive agent may be used.

For example, there may be listed a metal salt or an ammonium salt of a fatty acid having 8 to 36 carbon atoms such as laurate, myristate, palmitate, stearate, and ricinoleate; and condensate of sorbit-benzaldehyde; these may be used alone or as a mixture of two or more kind. Among them, an alkali metal salt or an ammonium salt of a fatty acid having 8 to 36 carbon atoms is preferred, and alkali metal salt is more preferable. As the alkali metal in the metal salt of the fatty acid having 8 to 36 carbon atoms, Na, K and the like are commonly used.

In preparing the solid adhesive agent of the present invention, the alkali metal salt or the ammonium salt of the fatty acid having 8 to 36 carbon atoms may be obtained by neutralizing the fatty acid having 8 to 36 carbon atoms with an alkaline material such as sodium hydroxide and ammonia after the fatty acid having 8 to 36 carbon atoms is mixed with an adhesive polymer and other additives.

In preparing the solid adhesive agent, the adhesive polymer, the gelling agent and other additives are dissolved and dispersed in an aqueous solvent to be filled in a container for solid adhesive agent composition. As the aqueous solvent, water is preferred, but in the aqueous solvent, an alcohol such as ethanol and isopropyl alcohol; a ketone such as methylethyl ketone; and an ester such as ethyl acetate may be included.

As a dissolution enhancing agent to dissolve the gelling agent in the aqueous solvent and also enable it to act as a moisturizing agent and a plasticizer, a polyvalent alcohol is preferably blended therein. For example, there may be listed a bivalent alcohol such as ethylene glycol, propylene glycol, diethylene glycol, triethylene glycol, and tetramethylene glycol; and an alcohol of trivalent or more such as glycerin, trimethylol propane and pentaerythritol. Additionally, a cyclic alcohol of a ketose (such as hexulose and heptulose), aldonic acid, aldaric acid, deoxy sugar, inositol-sugar and the like may be used, too.

The amount of the adhesive polymer to be blended is preferably 10 % by mass or more, more preferably 12 % by mass or more, and preferably 20 % by mass or less, more preferably 18 % by mass or less in 100 % by mass of the solid adhesive agent of the present invention. If the amount of the adhesive polymer to be blended is too small, adhesive strength of the solid adhesive agent tends to be lowered. The solid adhesive agent of the present invention is obtained, for example, by mixing and heating each of the materials to form into a viscous liquid material, and filling a container (such as lipstick-shaped container) with the liquid material followed by cooling and solidification, but if the amount of the adhesive polymer to be blended is too large, viscosity of the liquid material before being filled in the container may increase so that removal operation of the material from the container and filling operation of filling in a container having a relatively small diameter such as 1 to several cm will require a considerable time.

It is recommended that in the solid adhesive agent of the present invention, an amount of the gelling agent is preferably 3 % by mass or more, more preferably 4 % by mass or more, and preferably 12 % by mass or less, more preferably 10 % by mass or less in 100 % by mass of the solid adhesive agent. If the amount of the gelling agent is less than the above range, shape retention of the solid adhesive agent tends to be lowered, while if the amount of the gelling agent is more than the above range, initial adhesion may be lowered.

Additionally, the amount of the aqueous solvent in the solid adhesive agent is preferably 30 % by mass or more, more preferably 40 % by mass or more, and preferably 80 % by mass or less, more preferably 70 % by mass or less.

If an organic solvent as listed above is concomitantly used as the aqueous solvent in addition to water, the organic solvent is preferably 10 % by mass or less, more preferably 5 % by mass or less in 100 % by mass of the aqueous solvent. Not to mention, it is preferred that a total amount of the aqueous solvent consist of water.

Further, when the polyvalent alcohol is used, it is preferably 3 % by mass or more, more preferably 5 % by mass or more and preferably 20 % or less, more preferably 15 % by mass or less in 100 % by mass of the solid adhesive agent.

In the solid adhesive agent of the present invention, other additives may be added, too. As such additives, there may be listed fats and oils such as a linseed oil, ricin, a castor oil, a soybean oil, a coconut oil, a tall oil, a fish oil, oleic acid, linoleic acid, and linolenic acid; a surfactant such as polyoxyalkylene ether, polyoxyalkylene fatty acid ester, polyoxyalkylene sorbitan (mono, di, tri) fatty acid ester, (poly)glycerin (mono, di, tri) fatty acid ester, and sorbitan (mono, di, tri) stearate; a lubricant such as a liquid paraffin; an inorganic extender such as silica, alumina, titanium dioxide, barium oxide, zinc oxide, talc, and bentonite; an antioxidant such as sodium sulfite, sodium bisulfite, sodium thiosulfate, and rongalit; a sugar such as sucrose, sorbitol, and glucose; a dextrin such as dextrin and cyclodextrin; these may be used in an appropriate amount as required.

Additionally, a flavor, a fluorescent brightener, an antibacterial agent, and a colorant may be blended, too. It is recommended, for example, to add an antibacterial agent in an amount of about 0.01 to 0.1 % by mass in the solid adhesive agent.

In the solid adhesive agent of the present invention, in addition to the above adhesive polymer, a conventional polymer employed in the field of adhesive agent may be concomitantly used. As such a polymer, there may be listed a water-soluble polymer such as polyvinyl pyrrolidone, polyvinyl alcohol, and a modified starch; and a polymer emulsion such as polyacetic acid vinyl emulsion.

A specific method for preparing the solid adhesive agent may be, for example, as follows. After an adhesive polymer is mixed in an aqueous solvent (preferably water), the mixture is heated while being stirred to prepare a homogenous dispersion liquid, and a gelling agent and a polyvalent alcohol as required are mixed therein to be dissolved uniformly, and various additives are further mixed as required to form into a viscous liquid material. The liquid material is filled in a container (such as lipstick-shaped container) for cooling and solidification to give the solid adhesive agent.

When an alkali-soluble emulsion as the adhesive polymer of the present invention and an alkali metal salt or an ammonium salt of a fatty acid having 8 to 36 carbon atoms suitable as a gelling agent are used, a preparation method such as a following method is effective, too.

After an alkali-soluble emulsion is mixed in an aqueous solvent (preferably water), the mixture is heated while being stirred to prepare a homogenous emulsion, and a fatty acid having 8 to 36 carbon atoms and a polyvalent alcohol as required are mixed therein to be dissolved evenly. Next, an alkaline material such as sodium hydroxide is added in the mixture in a required amount for neutralization and various additives are further added as necessary to give a viscous liquid material. The liquid material is filled in a container (such as lipstick-shaped container) for cooling and solidification to give the solid adhesive agent.

A suitable adherend which is to be an object of the solid adhesive agent of the present invention include publicly known papers such as a Japanese paper, a synthetic paper, a high-quality paper, a medium quality paper, an art paper, a coated paper, a cast-coated paper, a foil paper, a kraft paper, an impregnated paper and evaporated paper; a polyester film (including sheet) such as polyethylene terephthalate and polybutylene terephthalate; a woven or non-woven fabric comprising a fiber such as cotton, polyester, and nylon; various threads; an aluminum foil, and a copper foil.

### EXAMPLES

Hereinafter, the present invention will be described in detail with reference to EXAMPLES, but these EXAMPLES are not intended to limit the scope of the present invention, and modifications within the spirit and scope of the present invention are also embraced by the present invention. Herein, "part" and "%" as used in the present examples are based on mass unless otherwise described. An evaluation method used in the examples is as follows.

### (1) Adhesion time

A following experiment was carried out under an atmosphere at a temperature of 25 °C and a relative humidity of 60 %. Plain copier paper (PPC paper) was cut in a size of 3 cm × 6 cm to be used as test paper. The solid adhesive agent was coated on one half of a surface of a sheet of the test paper, and immediately afterwards, another sheet of the test paper was superimposed and the paper sheets were bonded together. After a lapse of a given time from the bonding of the paper sheets, nonadherent part of the bonded test paper sheets were pulled in different directions from each other to separate them. A time from attaching the test paper sheets to a time when it is no longer possible to separate them without breaking was to be an adhesion time. It means that the adhesion time is shorter, the adhesive strength is exerted in the short time after the attachment; in other words, initial adhesion is excellent.

### Polymerization Example 1.

Into a four-necked separable flask equipped with a stirrer, a thermometer, a cooler(condenser), a nitrogen introduction tube, and a dropping funnel, 124.5 parts by mass of ion-exchange water and 1.5 parts by mass of ammonium salt of polyoxyethylene dodecyl ether sulfonate were fed. Nitrogen was gently poured in while stirred at an inside temperature of 68 °C so that inside of the reaction container is totally nitrogen-substituted. Next, 1.5 parts by mass of ammonium salt of polyoxyethylene dodecyl ether sulfonate was dissolved in 93.2 parts by mass of ion-exchange water, and a mixture of 35 parts by mass of methacrylic acid and 65 parts by mass of ethyl acrylate was fed thereto and the mixture was stirred to give a pre-emulsion. Further, 0.23 part by mass of ammonium persulfate was mixed with 23.2 parts by mass of ion-exchange water to prepare an aqueous solution of initiator. Five % of the pre-emulsion was fed into the reaction container and after stirring for 5 minutes, 0.017 parts by mass of sodium bisulfite was fed. Next, 5 % of the aqueous solution of initiator was fed into the reaction container for strirring for 20 minutes followed by performing initial polymerization. The inside temperature of the reaction container was kept at 72 °C, and remaining pre-emulsion and aqueous solution of initiator were dropped evenly for 2 hours. After the dropping was finished, the inside temperature was kept at 72 °C and stirring was continued for 1 hour followed by cooling to complete the reaction, so that an emulsion polymer having a nonvolatile content of 30 % was obtained. Tg of the resulting polymer was 46 °C, and an average particle diameter thereof was 54 nm, while viscosity of 1 % aqueous solution at pH of 7 was 145mPa·s.

### Polymerization Example 2.

The emulsion polymer having a nonvolatile content of 30 % was obtained in a same manner as Polymerization Example 1, except that 33 parts by mass of methacrylic acid and 67 parts by mass of ethyl acrylate were used. Tg of the resulting polymer was 42 °C.

### Polymerization Example 3.

The emulsion polymer having a nonvolatile content of 30 % was obtained in a same manner as Polymerization Example 1, except that 38 parts by mass of methacrylic acid and 62 parts by mass of ethyl acrylate were used. Tg of the resulting polymer was 54 °C.

### Polymerization Example 4.

The emulsion polymer having a nonvolatile content of 30 % was obtained in a same manner as Polymerization Example 1, except that 40 parts by mass of methacrylic acid and 60 parts by mass of ethyl acrylate were used. Tg of the obtained polymer was 60 °C.

### Polymerization Example 5.

The emulsion polymer having a nonvolatile content of 30 % was obtained in a same manner as Polymerization Example 1, except that 25 parts by mass of methacrylic acid and 75 parts by mass of ethyl acrylate were used. Tg of the obtained polymer was 32 °C.

### Example 1

In a flask equipped with a reflux condenser and a stirrer, 16.5 parts of water, 6 parts of stearic acid ("SA-200" manufactured by Asahi Denka Kogyo KK), 50.0 parts of the emulsion polymer obtained in the Polymerization Example 1, 6 parts of glycerin, and 6 parts of ethylene glycol were added, and a temperature of the mixture was elevated to 80 °C while being stirred, thereby obtaining a homogenous white liquid. Next, 15.5 parts of 25 % sodium hydroxide was added little by little, and after stirring for 10 hours, a viscous, light yellow and transparent liquid material was obtained. After a temperature of the liquid material was elevated to 90 °C, the liquid was filled in a lipstick-shaped container (inside diameter: 23 mm, length: 80 mm) and was stood to cool and was allowed to become solid, thereby obtaining a solid adhesive agent. The evaluation results of the solid adhesive agent are shown in Table 1.

### Example 2

In a flask equipped with a reflux condenser and a stirrer, 17.2 parts of water, 6 parts of stearic acid ("SA-200" manufactured by Asahi Denka Kogyo KK), 50.0 parts of the emulsion polymer obtained in the Polymerization Example 2, 6 parts of glycerin, and 6 parts of ethylene glycol were added, and a temperature of the mixture was elevated to 80 °C while being stirred, thereby obtaining a homogenous white liquid. Next, 14.8 parts of 25 % sodium hydroxide was added little by little to this white liquid, and after stirring for 10 hours, a viscous, light yellow and transparent liquid material was obtained. After a temperature of the liquid material was elevated to 90 °C, the liquid was filled in a lipstick-shaped container (inside diameter: 23 mm, length: 80 mm) and was stood to cool and was allowed to become solid, thereby obtaining a solid adhesive agent. The evaluation results of the solid adhesive agent are shown in Table 1.

### Example 3

In a flask equipped with a reflux condenser and a stirrer, 15.5 parts of water, 6 parts of stearic acid ("SA-200" manufactured by Asahi Denka Kogyo KK), 50.0 parts of the emulsion polymer obtained in the Polymerization Example 3, 6 parts of glycerin, and 6 parts of ethylene glycol were added, and a temperature of the mixture was elevated to 80 °C while being stirred, thereby obtaining a homogenous white liquid. Next, 16.5 parts of 25 % sodium hydroxide was added little by little to this white liquid, and after stirring for 10 hours, a viscous, light yellow and transparent liquid material was obtained. After a temperature of the liquid material was elevated to 90 °C, the liquid was filled in a lipstick-shaped container (inside diameter: 23 mm, length: 80 mm) and was stood to cool and was allowed to become solid, thereby obtaining a solid adhesive agent. The evaluation results of the solid adhesive agent are shown in Table 1.

### Comparative Example 1

In a flask equipped with a reflux condenser and a stirrer, 15.1 parts of water, 6 parts of stearic acid ("SA-200" manufactured by Asahi Denka Kogyo KK), 50.0 parts of the emulsion polymer obtained in the Polymerization Example 4, 6 parts of glycerin, and 6 parts of ethylene glycol were added, and a temperature of the mixture was elevated to 80 °C while being stirred, thereby obtaining a homogenous white liquid. Next, 16.9 parts of 25 % sodium hydroxide was added little by little, and after stirring for 10 hours, a viscous, light yellow and transparent liquid material was obtained. After a temperature of the liquid material was elevated to 90 °C, the liquid was filled in a lipstick-shaped container (inside diameter: 23 mm, length: 80 mm) and was stood to cool and was allowed to become solid, thereby obtaining a solid adhesive agent. The evaluation results of the solid adhesive agent are shown in Table 1.

### Comparative Example 2

In a flask equipped with a reflux condenser and a stirrer, 19.8 parts of water, 6 parts of stearic acid ("SA-200" manufactured by Asahi Denka Kogyo KK), 50.0 parts of the emulsion polymer obtained in the Polymerization Example 5, 6 parts of glycerin, and 6 parts of ethylene glycol were added, and a temperature of the mixture was elevated to 80 °C while being stirred, thereby obtaining a homogenous white liquid. Next, 12.2 parts of 25 % sodium hydroxide was added little by little, and after stirring for 10 hours, a viscous, light yellow and transparent liquid material was obtained. After a temperature of the liquid material was elevated to 90 °C, the liquid was filled in a lipstick-shaped container (inside diameter: 23 mm, length: 80 mm) and was stood to cool and was allowed to become solid, thereby obtaining a solid adhesive agent. The evaluation results of the solid adhesive agent are shown in Table 1.

**Table 1**

| | Example 1 | Example 2 | Example 3 | Comparative Example 1 | Comparative Example 2 |
|---|---|---|---|---|---|
| Tg of adhesive polymer (°C) | 96 | 42 | 54 | 60 | 32 |
| Adhesion time (minute) | 6 | 6.5 | 6.75 | 8.5 | 8.5 |

As seen from Table 1, adhesion time of the solid adhesive agents of Examples 1 to 3 is reduced compared to that of the solid adhesive agents of Comparative Example 1 and 2. In a practical usage such as bonding of paper using a solid adhesive agent, it is obvious that working efficiency of bonding is markedly improved by shortening of a time until effective adhesive strength is exerted. Therefore, it can be judged that the solid adhesive agents of Examples 1 to 3 have better initial adhesion to the solid adhesive agents of Comparative Examples 1 and 2.

### INDUSTRIAL APPLICABILITY

According to the present invention, a solid adhesive agent excellent in initial adhesion is produced by blending an adhesive polymer with a glass transition temperature (Tg) of 40 to 55 °C.

## Claims

1. A solid adhesive agent obtainable by blending an adhesive polymer having a glass transition temperature (Tg) of 40 to 55 °C and a gelling agent.

2. The solid adhesive agent according to claim 1, wherein the adhesive polymer is obtainable by copolymerizing an ethylene unsaturated monomer devoid of an acid group with an acid monomer.

3. A raw material liquid composition for preparing the solid adhesive agent according to claim 1 or 2, **characterized in that** the raw material liquid composition contains an adhesive polymer having a glass transition temperature (Tg) of 40 to 55 °C.
